# EUROPEAN PATENT APPLICATION

(11) **EP 4 458 601 A1**
(43) Date of publication of application: **06.11.2024**
(21) Application number: 22915552.8
(22) Date of filing: 09.11.2022
(51) Int. Cl.: B60L 1/00, B60L 3/00, B60L 50/60, B60L 58/12, B60L 58/24, B60K 1/04

(54) **ELECTRIC WORK VEHICLE**

(30) Priority: 27.12.2021 JP 2021213174
(71) Applicant: Kubota Corporation, Osaka 556-8601 (JP)
(72) Inventor: TAKASE Shunya, Sakai-shi, Osaka 590-0908 (JP); YAMANAKA Yukifumi, Sakai-shi, Osaka 590-0908 (JP); TAMBA Daiki, Sakai-shi, Osaka 590-0908 (JP)
(74) Representative: Müller-Boré & Partner Patentanwälte PartG mbB
(86) International application number: PCT/JP2022/041713
(87) International publication number: WO 2023/127320

(57) **Abstract**

An electric work vehicle includes: a battery (4); an inverter (14) that converts output from the battery (4) to AC power; a motor (M) driven by the converted AC power; a travel device (42) driven by the motor (M); a controller (44) that controls a current flowing through the motor (M) by running the inverter (14) in accordance with rotational speed information indicative of a rotational speed of the motor (M) and a required rotational speed required for the motor (M); a DC/DC converter (71) that converts an output voltage of the battery (4) to a voltage applicable to the controller (44); and a current limiter (73) that limits the current flowing through the motor (M) when a temperature of the inverter (14) is higher than a temperature set in advance. The controller (44) is configured to limit the current flowing through the motor (M) when at least one of the temperature of the inverter (14), a temperature of the motor (M), and a temperature of the DC/DC converter (71) is higher than a temperature set in advance.

## Description

### Technical Field

The present invention relates to an electric work vehicle that travels by using electric energy.

### Background Art

Electric work vehicles that travel by using electric energy as a motive power source have been conventionally used. An example of such an electric work vehicle is described in Patent Document 1 noted below.

Patent Document 1 describes an electric work vehicle that includes a battery, a motor driven by power supplied from the battery, a travel device driven by the motor, a motor controller that controls motor driving states, and a control device that controls operations of the motor by setting a target speed for the motor and giving control signals to the motor controller. The motor controller includes an inverter that controls a current flowing through the motor. A voltage obtained by reducing the voltage of the battery with use of a DC/DC converter is supplied as a power source to the control device, and the control device drives the motor by controlling the inverter.

### Prior Art Document

### Patent Document

Patent Document 1: JP 2013-1228A

### Disclosure of the Invention

### Problem to be Solved by the Invention

When a current flowing through the motor increases, for example, the motor generates heat, and a current flowing through the inverter also increases with the increase in the current flowing through the motor, and the inverter also generates heat. The DC/DC converter also generates heat in accordance with a load current, and depending on the arrangement of the inverter, the motor, and the DC/DC converter, the temperature of the DC/DC converter further increases due to the DC/DC converter receiving heat from the inverter and the motor. Excessive heat generation in the inverter, the motor, and the DC/DC converter causes deterioration, and therefore, it is desirable to drive the inverter, the motor, and the DC/DC converter in accordance with heat generation conditions.

Therefore, there is demand for an electric work vehicle capable of suppressing a current flowing through a motor in accordance with heat generation conditions of an inverter, the motor, and a DC/DC converter.

### Means for Solving Problem

An electric work vehicle according to the present invention has a characteristic configuration including: a battery installed in a machine body; an inverter configured to convert DC power that is based on output from the battery to AC power; a motor configured to be driven by the AC power converted by the inverter; a rotational speed information obtaining unit configured to obtain rotational speed information indicative of a rotational speed of the motor; a travel device configured to be driven by the motor; an operation member configured to change a required rotational speed required for the motor; a controller configured to control a current flowing through the motor by running the inverter in accordance with the rotational speed information and the required rotational speed; a DC/DC converter configured to convert an output voltage of the battery to a voltage that is applicable to the controller as a power source; a temperature information obtaining unit configured to obtain inverter temperature information indicative of a temperature of the inverter, motor temperature information indicative of a temperature of the motor, and converter temperature information indicative of a temperature of the DC/DC converter; and a current limiter configured to limit the current flowing through the motor when the temperature of the inverter is higher than a temperature set in advance, wherein the controller is configured to limit the current flowing through the motor when at least one of the temperature of the inverter, the temperature of the motor, and the temperature of the DC/DC converter is higher than a temperature set in advance.

In this characteristic configuration, the current flowing through the motor is limited when at least one of the temperature of the inverter, the temperature of the motor, and the temperature of the DC/DC converter is higher than a temperature set in advance, and therefore, it is possible to realize an electric work vehicle capable of suppressing the current flowing through the motor in accordance with heat generation conditions of the inverter, the motor, and the DC/DC converter. Therefore, deterioration of the inverter, the motor, and the DC/DC converter can be suppressed.

It is preferable that the electric work vehicle further includes a battery information obtaining unit configured to obtain at least one of: power storage amount information indicative of an amount of power stored in the battery; and battery temperature information indicative of a temperature of the battery, and the controller is configured to limit the current flowing through the motor in at least one of: a case where the amount of power stored in the battery is less than a power storage amount set in advance; and a case where the temperature of the battery is higher than a temperature set in advance.

When the amount of power stored in the battery decreases, an output voltage of the battery decreases. Also, when the temperature of the battery increases, power storing ability of the battery decreases, and the output voltage of the battery decreases in this case as well. When the output voltage of the battery has decreased, obtaining a desired output torque from the motor involves increasing the amount of current flowing through the motor. Accordingly, a reduction in the amount of power stored in the battery and an increase in the temperature of the battery lead to a further increase in the temperatures of the inverter and the motor. Therefore, when the amount of power stored in the battery is small or the temperature of the battery is high, it is possible to suppress generation of heat from the inverter and the motor by limiting the current flowing through the motor as described above to suppress the output torque of the motor. Moreover, when the output torque of the motor is suppressed, it is possible to reduce consumption of power supplied from the battery, for example, and consequently increase the distance the electric work vehicle can travel with the power remaining in the battery.

Also, it is preferable that the electric work vehicle further includes an abnormality level calculator configured to calculate abnormality levels of the inverter, the motor, and the DC/DC converter based on the inverter temperature information, the motor temperature information, and the converter temperature information, respectively, and the higher the abnormality levels are, the further the current flowing through the motor is limited.

When the abnormality level is high regarding any of the temperature of the inverter, the temperature of the motor, and the temperature of the DC/DC converter, this configuration makes it possible to further limit the current flowing through the motor. Therefore, it is possible to further suppress generation of heat from the inverter, the motor, or the DC/DC converter having the high abnormality level.

It is preferable that the electric work vehicle further includes a coolant temperature information obtaining unit configured to obtain coolant temperature information indicative of a temperature of coolant cooling the inverter, the motor, and the DC/DC converter, and the controller is configured to limit the current flowing through the motor when the temperature of the coolant is higher than a temperature set in advance.

The electric work vehicle may include a cooling system for circulating coolant to cool the inverter, the motor, and the DC/DC converter. With this configuration, it is possible to estimate an amount of heat generated by the inverter, the motor, and the DC/DC converter based on not only the temperature of the inverter, the temperature of the motor, and the temperature of the DC/DC converter, but also the temperature of the coolant cooling the inverter, the motor, and the DC/DC converter, and limit the current flowing through the motor based on the estimated amount of heat.

It is preferable that the electric work vehicle further includes a notification unit configured to output, when the current flowing through the motor is limited, a notification indicating why the current flowing through the motor is limited.

This configuration enables an operator to know why the current flowing through the motor is limited. Accordingly, it is possible to urge the operator to drive in such a manner as to suppress an increase in the amount of current flowing through the motor, for example.

### Brief Description of the Drawings

FIG. 1 is a left side view of a tractor.
FIG. 2 is a left side view showing arrangement of an inverter and the like.
FIG. 3 is a diagram showing a flow of motive power transmission.
FIG. 4 is a diagram showing functional units for driving a motor.
FIG. 5 is a diagram showing a relationship between an operation amount of an operation member and a required rotational speed of the motor.
FIG. 6 is a diagram showing a relationship between an abnormality level and a current limitation level.
FIG. 7 is a diagram showing current limitation performed by a limiter and a current limiter.
FIG. 8 shows an example of motor torque curves.
FIG. 9 is a diagram showing an example of notification performed by a notification unit.

### Best Mode for Carrying out the Invention

An electric work vehicle according to the present invention is configured to suppress a current flowing through a motor in accordance with heat generation conditions of an inverter, the motor, and a DC/DC converter. The following describes an electric work vehicle according to the present embodiment. Note that the following describes a case where the electric work vehicle is a tractor.

An embodiment of the present invention will be described based on the drawings. In the following description, the direction of an arrow F and the direction of an arrow B in the drawings will be respectively referred to as "the front side" and "the rear side" unless otherwise stated. Also, the direction of an arrow U and the direction of an arrow D in the drawings will be respectively referred to as "the upper side" and "the lower side".

### Overall Configuration of Tractor

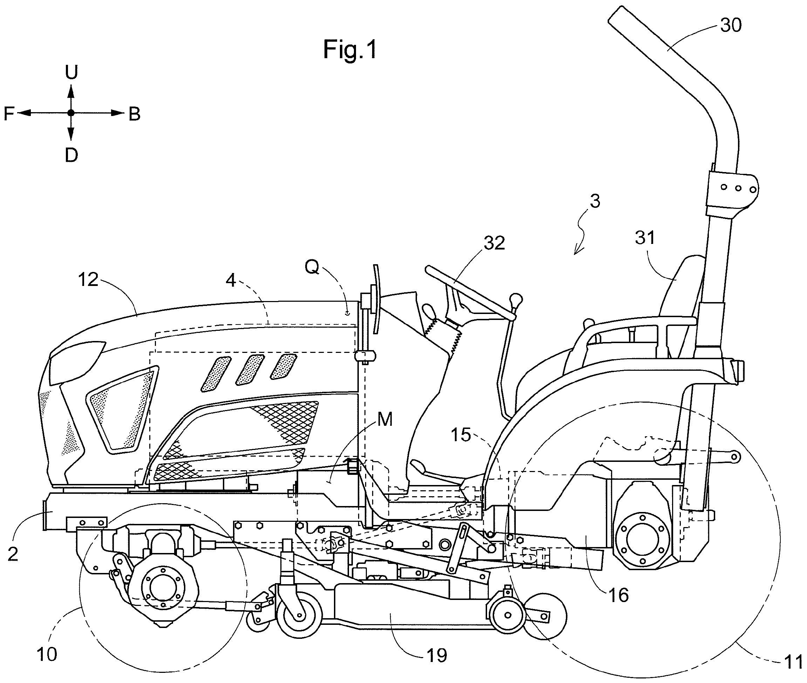

The following describes a tractor according to the present embodiment. As shown in FIG. 1, the tractor includes left and right front wheels 10, left and right rear wheels 11, and a cover member 12.

The tractor also includes a body frame 2 and a driving section 3. The body frame 2 is supported by the left and right front wheels 10 and the left and right rear wheels 11.

The cover member 12 is disposed in a front portion of the body of the tractor. The driving section 3 is behind the cover member 12. In other words, the cover member 12 is in front of the driving section 3.

The driving section 3 includes a protective frame 30, a driver's seat 31, and a steering wheel 32. An operator can sit on the driver's seat 31. Accordingly, the operator can get on the driving section 3. The operator steers the left and right front wheels 10 by operating the steering wheel 32. The operator can perform various driving operations in the driving section 3.

The tractor includes a battery 4 for driving. The cover member 12 is configured to be pivotable about an opening/closing axis Q extending in the left-right direction of the body. Accordingly, the cover member 12 is configured to be openable and closable. When the cover member 12 is closed, the battery 4 for driving is covered by the cover member 12.

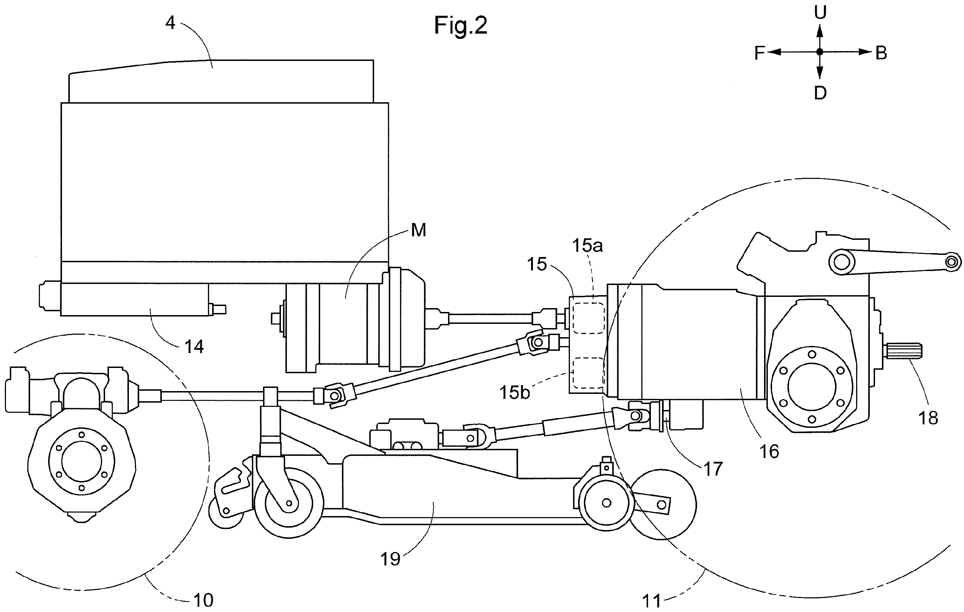

As shown in FIG. 2, the tractor includes an inverter 14 and a motor M. The battery 4 for driving supplies power to the inverter 14. The inverter 14 converts DC power supplied from the battery 4 for driving to AC power, and supplies the AC power to the motor M. The motor M is driven by the AC power supplied from the inverter 14.

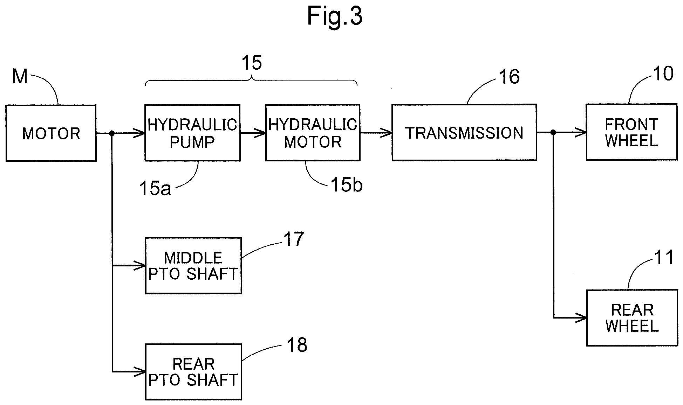

As shown in FIGS. 2 and 3, the tractor includes a hydraulic continuously variable transmission 15 and a transmission 16. As shown in FIG. 3, the hydraulic continuously variable transmission 15 includes a hydraulic pump 15a and a hydraulic motor 15b.

The hydraulic pump 15a is driven by rotational motive power transmitted from the motor M. As a result of the hydraulic pump 15a being driven, rotational motive power is output from the hydraulic motor 15b. The hydraulic continuously variable transmission 15 is configured to change the speed of rotational motive power between the hydraulic pump 15a and the hydraulic motor 15b. Also, the hydraulic continuously variable transmission 15 is configured to be capable of changing the transmission ratio in a stepless manner.

The rotational motive power output from the hydraulic motor 15b is transmitted to the transmission 16. The speed of the rotational motive power transmitted to the transmission 16 is changed by a gear transmission mechanism included in the transmission 16, and the rotational motive power is distributed to the left and right front wheels 10 and the left and right rear wheels 11. Thus, the left and right front wheels 10 and the left and right rear wheels 11 are driven.

As shown in FIGS. 2 and 3, the tractor also includes a middle PTO shaft 17 and a rear PTO shaft 18. Rotational motive power output from the motor M is distributed to the hydraulic pump 15a, the middle PTO shaft 17, and the rear PTO shaft 18. The middle PTO shaft 17 and the rear PTO shaft 18 are rotated by the distributed rotational motive power.

If a work device is connected to the middle PTO shaft 17 or the rear PTO shaft 18, the work device is driven by rotational motive power transmitted by the middle PTO shaft 17 or the rear PTO shaft 18. For example, in the present embodiment, a grass cutting device 19 is connected to the middle PTO shaft 17 as shown in FIG. 2. The grass cutting device 19 is driven by rotational motive power transmitted by the middle PTO shaft 17.

### Motor Control

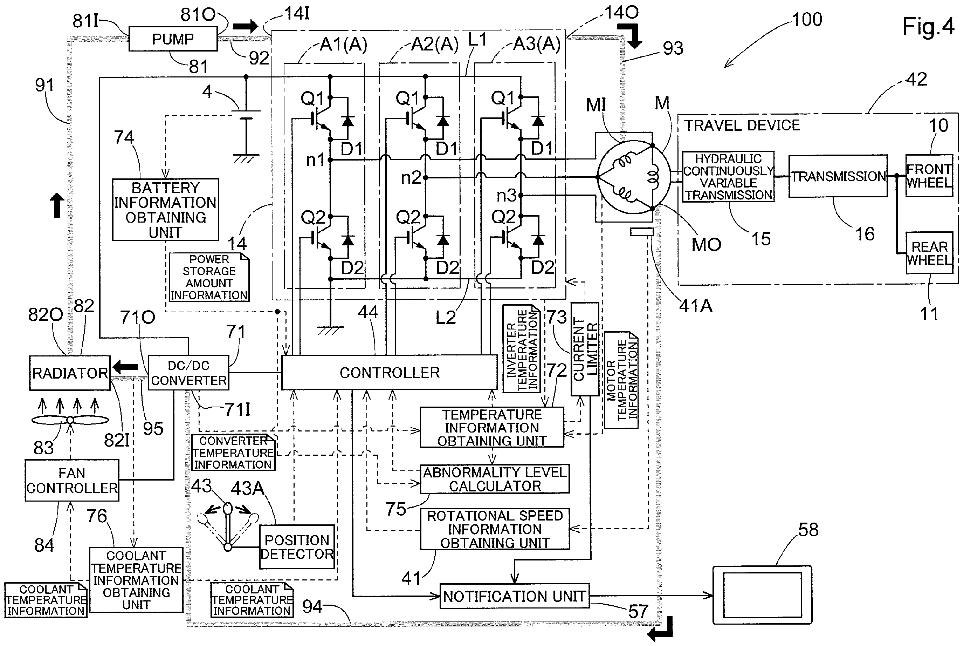

FIG. 4 is a block diagram showing functional units relating to driving of the motor M. The block diagram of FIG. 4 shows the battery (battery for driving) 4, the inverter 14, the motor M, a rotational speed information obtaining unit 41, a travel device 42, an operation member 43, a controller 44, a notification unit 57, a DC/DC converter 71, a temperature information obtaining unit 72, a current limiter 73, a battery information obtaining unit 74, an abnormality level calculator 75, a coolant temperature information obtaining unit 76, a pump 81, a radiator 82, a fan 83, and a fan controller 84. In order to drive the motor M, each functional unit is constituted by hardware and/or software, including a CPU as a core component.

The battery 4 covered by the cover member 12 as described above is installed in the machine body. Electric energy stored in the battery 4 is used to drive the motor M.

The inverter 14 converts DC power that is output from the battery 4 to AC power. The "output from the battery 4" refers to a DC voltage and a DC current output from the battery 4. Accordingly, DC power output from the battery 4 is DC power due to a DC voltage and a DC current output from the battery 4.

In the present embodiment, the inverter 14 includes three arm portions A each including a first switching element Q1 and a second switching element Q2 connected in series between a first power supply line L1 and a second power supply line L2. The first power supply line L1 is connected to a positive terminal of the two output terminals of the battery 4, and the second power supply line L2 is connected to a negative terminal of the two output terminals of the battery 4. The inverter 14 includes the three arm portions A between the first power supply line L1 and the second power supply line L2. Hereinafter, the three arm portions A will be referred to as arm portions A1, A2, and A3 when distinguished from each other. In the present embodiment, both the first switching element Q1 and the second switching element Q2 are constituted by P-type IGBTs. A collector terminal of the first switching element Q1 is connected to the first power supply line L1, and an emitter terminal of the first switching element Q1 is connected to a collector terminal of the second switching element Q2. An emitter terminal of the second switching element Q2 is connected to the second power supply line L2. A diode D1 is provided between the emitter terminal and the collector terminal of the first switching element Q1, and an anode terminal and a cathode terminal of the diode D1 are respectively connected to the emitter terminal and the collector terminal of the first switching element Q1. Also, a diode D2 is provided between the emitter terminal and the collector terminal of the second switching element Q2, and an anode terminal and a cathode terminal of the diode D2 are respectively connected to the emitter terminal and the collector terminal of the second switching element Q2. Respective gate terminals of the first switching element Q1 and the second switching element Q2 are connected to the controller 44, which will be described later. The controller 44 performs PWM control to let current flow through the first switching element Q1 of an arm portion A of the inverter 14 and the second switching element Q2 of one of the other two arm portions A of the inverter 14. Accordingly, DC power output from the battery 4 is converted to AC power in accordance with the frequency of a PWM control signal.

The motor M is driven by the AC power converted by the inverter 14. Three terminals of the motor M are respectively connected to: a first node n1 to which the first switching element Q1 and the second switching element Q2 of the arm portion A1 are connected; a second node n2 to which the first switching element Q1 and the second switching element Q2 of the arm portion A2 are connected; and a third node n3 to which the first switching element Q1 and the second switching element Q2 of the arm portion A3 are connected. The first node n1 to which the first switching element Q1 and the second switching element Q2 of the arm portion A1 are connected is a portion at which the emitter terminal of the first switching element Q1 and the collector terminal of the second switching element Q2 constituting the arm potion A1 are connected. The second node n2 to which the first switching element Q1 and the second switching element Q2 of the arm portion A2 are connected is a portion at which the emitter terminal of the first switching element Q1 and the collector terminal of the second switching element Q2 constituting the arm potion A2 are connected. The third node n3 to which the first switching element Q1 and the second switching element Q2 of the arm portion A3 are connected is a portion at which the emitter terminal of the first switching element Q1 and the collector terminal of the second switching element Q2 constituting the arm potion A3 are connected. FIG. 4 shows a case where the coils of the motor M are connected in a delta configuration, but the coils of the motor M may also be connected in a star configuration.

The rotational speed information obtaining unit 41 obtains rotational speed information indicative of a rotational speed of the motor M. The rotational speed of the motor M is a rotational speed of a rotor included in the motor M. The rotational speed can be detected with use of a rotation sensor 41A that includes a Hall element, for example. Alternatively, it is possible to calculate the rotational speed of the motor M based on the current flowing through the motor M, instead of using the rotation sensor 41A. In this case, the rotational speed can be calculated based on a detection result obtained from a current sensor (not shown). The detection result of the rotational speed of the motor M obtained from the rotation sensor 41A is transmitted as the rotational speed information to the rotational speed information obtaining unit 41.

The travel device 42 is driven by the motor M. In the present embodiment, the hydraulic continuously variable transmission 15, the transmission 16, the left and right front wheels 10, and the left and right rear wheels 11 described above are collectively referred to as the travel device 42. As described above, rotational motive power output from the motor M is transmitted via the hydraulic continuously variable transmission 15 to the transmission 16. The speed of the rotational motive power transmitted to the transmission 16 is changed by the gear transmission mechanism included in the transmission 16, and the rotational motive power is distributed to the left and right front wheels 10 and the left and right rear wheels 11. Thus, the left and right front wheels 10 and the left and right rear wheels 11 are driven as described above, and the tractor is movable forward.

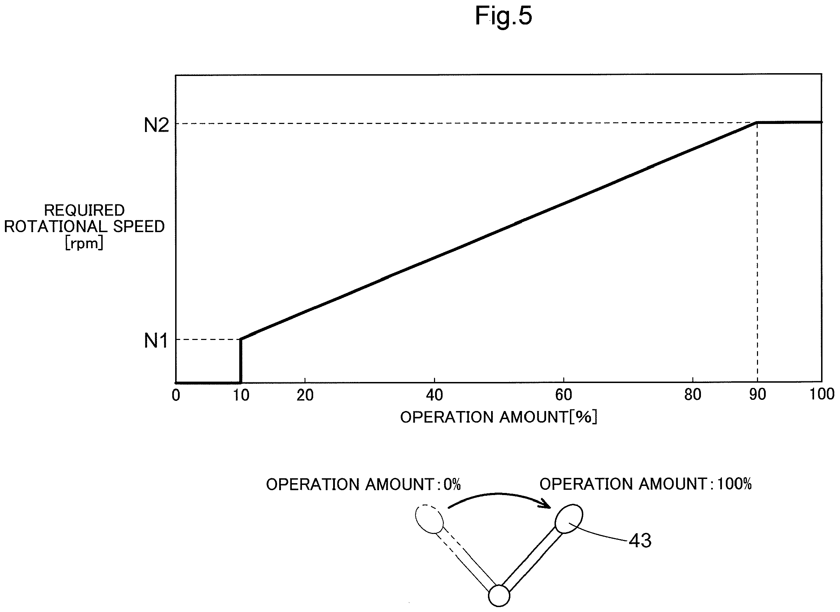

The operation member 43 changes a required rotational speed required for the motor M. The required rotational speed required for the motor M is a command value indicative of a rotational speed of rotational motive power that the operator wants the motor M to output, i.e., a commanded rotational speed. In the present embodiment, the operation member 43 is a lever that is provided on a side of the driver's seat 31 and pivotable in the front-rear direction. As the operation member 43 is inclined further forward, the required rotational speed increases and the motor M rotates at a higher speed, and the operation member 43 is configured to be stably kept at a position to which the operation member 43 is operated. FIG. 5 shows a relationship between an operation amount of the operation member 43 and the required rotational speed of the motor M. In FIG. 5, the vertical axis indicates the required rotational speed of the motor M, and the horizontal axis indicates the operation amount of the operation member 43. In the example shown in FIG. 5, when the operation amount is 10[%], the required rotational speed is N1 [rpm], and when the operation amount is 90[%], the required rotational speed is N2 [rpm]. The required rotational speed is set to be proportional to the operation amount in the range from 10[%] to 90[%]. The operation amount is expressed in the unit of %, and 0[%] corresponds to a state where the operation member 43 is closest to the operator, and 100[%] corresponds to a state where the operation member 43 is inclined forward as much as possible. In this example, the operation member is configured such that, when the operation amount is less than 10[%], the required rotational speed is 0 [rpm], and when the operation amount is 90[%] or more, the required rotational speed is N2 [rpm] as described later in detail. In this example, the required rotational speed of the motor M can be set in accordance with the operation amount of the operation member 43 based on the relationship described above.

Referring back to FIG. 4, in the present embodiment, the operation amount of the operation member 43, i.e., the position of the operation member 43 in the front-rear direction is detected by a position detector 43A. Accordingly, it is possible to identify the required rotational speed required for the motor M based on the position of the operation member 43 detected by the position detector 43A.

The controller 44 is configured to control a current flowing through the motor M by running the inverter 14 in accordance with the rotational speed information and the required rotational speed. The rotational speed information is transmitted from the rotational speed information obtaining unit 41 to the controller 44. The required rotational speed can be identified based on the detection result of the position of the operation member 43, which is transmitted from the position detector 43A. The current flowing through the motor M is a current output from the inverter 14 and flowing through the coils of the motor M. Accordingly, the controller 44 is configured to control the current flowing through the coils of the motor M by controlling the inverter 14 in such a manner that the current rotational speed of the motor M indicated by the rotational speed information becomes equal to the required rotational speed identified based on the detection result obtained from the position detector 43A. With this configuration, it is possible to control the rotational motive power that is output from the motor M by operating the operation member 43.

The DC/DC converter 71 converts an output voltage of the battery 4 to a voltage applicable to the controller 44 as a power source. The output voltage of the battery 4 is a DC voltage output from the battery 4. The voltage applicable to the controller 44 as a power source is a voltage that is required to drive the controller 44 and is lower than a voltage prescribed by the absolute maximum rating. Specifically, the output voltage of the battery 4 is several tens of volts, and the voltage applicable to the controller 44 as a power source is from several volts to ten-odd volts (i.e. less than twenty volts). Accordingly, the DC/DC converter 71 converts a DC voltage of several tens of volts output from the battery 4 to a voltage within the range from several volts to ten-odd volts applicable to the controller 44 as a power source. Therefore, a step-down converter is used as the DC/DC converter 71. A synchronous rectification type converter is preferably used as the DC/DC converter 71 to increase the efficiency. Of course, it is also possible to use a regulator that is not a switching regulator. In the present embodiment, the voltage output from the DC/DC converter 71 is applied to the fan controller 84 in addition to the controller 44 as shown in FIG. 4. Of course, it is also possible to apply the voltage output from the DC/DC converter 71 to other functional units in accordance with the rated voltages of those functional units.

The temperature information obtaining unit 72 obtains inverter temperature information indicative of a temperature of the inverter 14, motor temperature information indicative of a temperature of the motor M, and converter temperature information indicative of a temperature of the DC/DC converter 71. The temperature of the inverter 14 is preferably a temperature of the first switching element Q 1 and the second switching element Q2, which are expected to have the highest temperature among the elements of the inverter 14. The temperature of the inverter 14 may be obtained by measuring the temperature of the first switching element Q1 and the second switching element Q2 or a temperature of a substrate on which the first switching element Q 1 and the second switching element Q2 are mounted. The inverter 14 also includes a capacitor (not shown), and a temperature of the capacitor may also be measured as the temperature of the inverter 14. The temperature of the motor M is preferably a temperature of the coils and a permanent magnet, which are expected to have the highest temperature among the components of the motor M. The temperature of the coils and the permanent magnet cannot be measured directly, and therefore, the temperature may also be measured in the vicinity of the coils and the permanent magnet. If the DC/DC converter 71 is constituted by a synchronous rectification type switching regulator, for example, the temperature of the DC/DC converter 71 may be obtained by measuring a temperature of coils and a low-side switching element (switching element disposed between a power supply line and a ground potential), which are expected to have the highest temperature among the components of the DC/DC converter 71, or a temperature of a substrate on which the coils and the low-side switching element are mounted. If the DC/DC converter 71 is constituted by a non-synchronous rectification type switching regulator, the temperature of the DC/DC converter 71 may be obtained by measuring a temperature of a coil and a diode, which are expected to have the highest temperature among the components of the DC/DC converter 71, or a temperature of a substrate on which the coil and the diode are mounted. Of course, it is possible to measure a temperature of a switching element, depending on the step-down ratio of the DC/DC converter 71. Alternatively, if the DC/DC converter 71 is constituted by a regulator (e.g., three-terminal regulator) that is not a switching regulator, for example, it is possible to measure a temperature of the three-terminal regulator or a substrate on which the three-terminal regulator is mounted. These temperatures can be detected with use of a temperature detection element (not shown) such as a thermistor, for example, based on a current flowing through the temperature detection element or a voltage between a pair of terminals of the temperature detection element. The temperature information obtaining unit 72 obtains detection results of such temperature detection elements as the inverter temperature information, the motor temperature information, and the converter temperature information.

When the temperature of the inverter 14 is higher than a temperature set in advance, the current limiter 73 limits the current flowing through the motor M. The temperature of the inverter 14 is obtained as the inverter temperature information by the temperature information obtaining unit 72 and transmitted to the current limiter 73. The current flowing through the motor M is the current flowing through the coils of the motor M. The current flowing through the coils is substantially equal to the current output from the inverter 14. Therefore, when the temperature of the inverter 14 indicated by the inverter temperature information obtained by the temperature information obtaining unit 72 is higher than the temperature set in advance, the current limiter 73 limits the current output from the inverter 14. Specifically, a period for which the first switching element Q 1 and the second switching element Q2 are closed, i.e., the on-duty ratio of PWM control is limited so as not to be more than a predetermined value. Thus, it is possible to keep the first switching element Q1 and the second switching element Q2 from being closed for more than a certain period, to limit the current output from the inverter 14 and limit the current flowing through the coils of the motor M. The reduction in the amount of current flowing through the inverter 14 can suppress heat generation from the inverter 14, and accordingly, deterioration of the inverter 14 can be suppressed.

In this example, the controller 44 is configured to limit the current flowing through the motor M when at least one of the temperature of the inverter 14, the temperature of the motor M, and the temperature of the DC/DC converter 71 is higher than a temperature set in advance. The temperature of the inverter 14 is obtained as the inverter temperature information by the temperature information obtaining unit 72 and transmitted to the controller 44. The temperature of the motor M is obtained as the motor temperature information by the temperature information obtaining unit 72 and transmitted to the controller 44. The temperature of the DC/DC converter 71 is obtained as the converter temperature information by the temperature information obtaining unit 72 and transmitted to the controller 44. A threshold is set in advance for each type of temperature information, and when a temperature indicated by the temperature information is higher than the threshold, the controller 44 is capable of limiting the current flowing through the coils of the motor M by limiting the current output from the inverter 14. With this configuration, it is possible to reduce the amount of current flowing through the inverter 14, the motor M, and the DC/DC converter 71 to suppress heat generation from these elements, and accordingly, deterioration of the inverter 14, the motor M, and the DC/DC converter 71 can be suppressed.

Moreover, the inverter temperature information indicative of the temperature of the inverter 14 is transmitted to both the current limiter 73 and the controller 44 as described above, and the inverter 14 is protected through control performed by the current limiter 73 and the controller 44. Therefore, the inverter 14 can be more reliably protected.

The battery information obtaining unit 74 obtains at least one of: power storage amount information indicative of an amount of power stored in the battery 4; and battery temperature information indicative of a temperature of the battery 4. It is difficult to directly detect the amount of power stored in the battery 4. However, there is a correlation between the amount of power stored in the battery 4 and an output voltage of the battery 4, and therefore, the battery information obtaining unit 74 detects the output voltage of the battery 4 as the amount of power stored in the battery 4 in this example. The detection result of the output voltage of the battery 4 corresponds to the power storage amount information. The temperature of the battery 4 can be detected based on a current flowing through a temperature detection element (not shown) such as a thermistor disposed near the battery 4 or a voltage between a pair of terminals of the temperature detection element, for example. The battery information obtaining unit 74 obtains the power storage amount information and the battery temperature information as battery information.

The controller 44 is configured to limit the current flowing through the motor M in at least one of: a case where the amount of power stored in the battery 4 is less than a power storage amount set in advance; and a case where the temperature of the battery 4 is higher than a temperature set in advance. In this example, the amount of power stored in the battery 4 corresponds to an output voltage of the battery 4. Accordingly, the power storage amount set in advance corresponds to a voltage set in advance. Therefore, when the output voltage of the battery 4 is lower than the voltage set in advance, the controller 44 is configured to limit the current flowing through the coils of the motor M by limiting the current output from the inverter 14. Also, when the temperature of the battery 4 is higher than the temperature set in advance, the controller 44 is configured to limit the current flowing through the coils of the motor M by limiting the current output from the inverter 14.

The abnormality level calculator 75 calculates abnormality levels of the inverter 14, the motor M, the DC/DC converter 71, and the battery 4 based on the inverter temperature information, the motor temperature information, the converter temperature information, and the battery information, respectively. The inverter temperature information indicates the temperature of the inverter 14, the motor temperature information indicates the temperature of the motor M, and the converter temperature information indicates the temperature of the DC/DC converter 71. These types of temperature information are obtained by the temperature information obtaining unit 72 and transmitted to the abnormality level calculator 75. The battery information indicates the amount of power stored in the battery 4 and the temperature of the battery 4 and is transmitted from the battery information obtaining unit 74 to the abnormality level calculator 75. Reference values are set in advance for the inverter 14, the motor M, the DC/DC converter 71, and the battery 4, and respective abnormality levels of these elements are calculated by comparing the reference values with temperatures indicated by the temperature information or a power storage amount or temperature of the battery indicated by the battery information. That is to say, the abnormality level calculator 75 calculates: the abnormality level of the inverter 14 by calculating a difference between a reference value set in advance for the inverter 14 and a temperature of the inverter 14 indicated by the inverter temperature information, and dividing the difference by the reference value set in advance for the inverter 14; the abnormality level of the motor M by calculating a difference between a reference value set in advance for the motor M and a temperature of the motor M indicated by the motor temperature information, and dividing the difference by the reference value set in advance for the motor M; and the abnormality level of the DC/DC converter 71 by calculating a difference between a reference value set in advance for the DC/DC converter 71 and a temperature of the DC/DC converter 71 indicated by the converter temperature information, and dividing the difference by the reference value set in advance for the DC/DC converter 71. Also, the abnormality level calculator 75 calculates the abnormality level of the battery 4 by calculating a difference between a reference value set in advance regarding the power storage amount of the battery 4 and a power storage amount of the battery 4 indicated by the power storage amount information, and dividing the difference by the reference value set in advance regarding the power storage amount of the battery 4. Furthermore, the abnormality level calculator 75 calculates the abnormality level of the battery 4 by calculating a difference between a reference value set in advance regarding the temperature of the battery 4 and a temperature of the battery 4 indicated by the battery temperature information, and dividing the difference by the reference value set in advance regarding the temperature of the battery 4. The abnormality levels calculated as described above are transmitted to the controller 44.

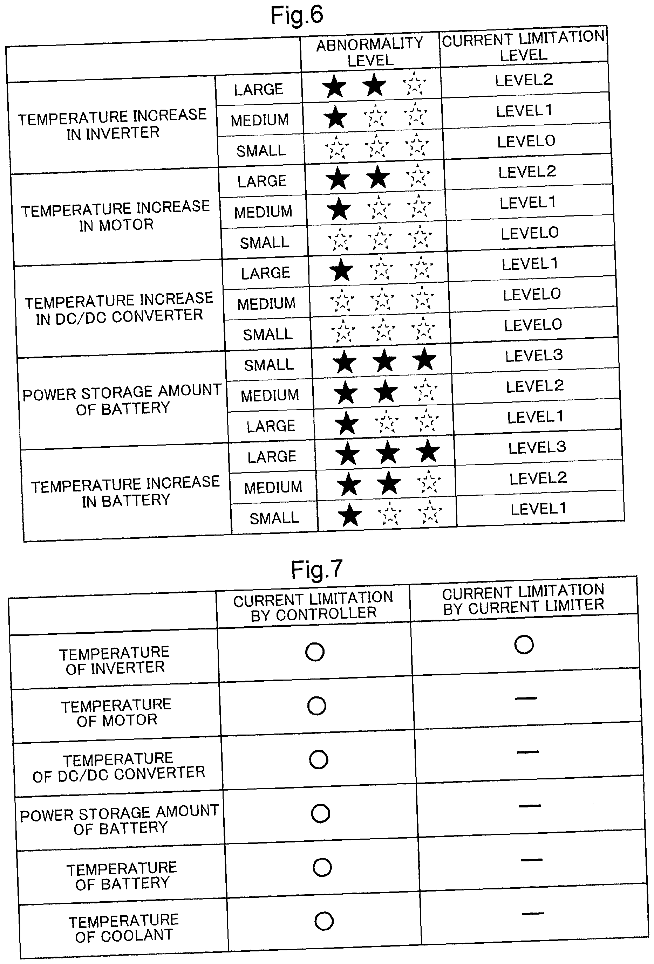

The higher the abnormality levels transmitted from the abnormality level calculator 75 are, the further the controller 44 is configured to limit the current flowing through the motor M. FIG. 6 shows an example of a relationship between abnormality levels of the elements and limitation levels (current limitation levels) applied to the current flowing through the motor M. In the example shown in FIG. 6, an increase in the temperature of the inverter 14, an increase in the temperature of the motor M, and an increase in the temperature of the DC/DC converter 71 are each classified into "large", "medium", or "small", and abnormality levels corresponding to the classes are indicated by the numbers of star marks. Ranges corresponding to the respective classes can be set for each item.

For example, when an increase in the temperature of the inverter 14 is "large", the abnormality level is "2", and accordingly, "level 2" is set as the level of limitation posed on the current (hereinafter referred to as the "current limitation level"). When an increase in the temperature of the inverter 14 is "medium", the abnormality level is "1", and accordingly, "level 1" is set as the current limitation level. When an increase in the temperature of the inverter 14 is "small", the abnormality level is "0", and accordingly, "level 0" is set as the current limitation level.

When an increase in the temperature of the motor M is "large", the abnormality level is "2", and accordingly, "level 2" is set as the current limitation level. When an increase in the temperature of the motor M is "medium", the abnormality level is "1", and accordingly, "level 1" is set as the current limitation level. When an increase in the temperature of the motor M is "small", the abnormality level is "0", and accordingly, "level 0" is set as the current limitation level.

In this example, an increase in the temperature of the DC/DC converter 71 is not so serious as an increase in the temperature of the inverter 14 or an increase in the temperature of the motor M. Therefore, the criteria for determining the abnormality level of the DC/DC converter 71 are loose compared with the criteria for determining abnormality levels based on an increase in the temperature of the inverter 14 or an increase in the temperature of the motor M. That is to say, when an increase in the temperature of the DC/DC converter 71 is "large", the abnormality level is "1" and "level 1" is set as the current limitation level. When an increase in the temperature of the DC/DC converter 71 is "medium" or "small", the abnormality level is "0" and "level 0" is set as the current limitation level.

On the other hand, a reduction in the amount of power stored in the battery 4 and an increase in the temperature of the battery 4 are more serious than an increase in the temperature of the inverter 14, an increase in the temperature of the motor M, or an increase in the temperature of the DC/DC converter 71. This is because, when the remaining charge of the battery 4 is 0, the electric work vehicle can no longer travel. Also, the power storing ability of the battery 4 decreases with an increase in the temperature of the battery 4, and this also may lead to a situation in which the electric work vehicle can no longer travel. Therefore, the criteria for determining the abnormality level of the battery 4 are stricter than the criteria for determining abnormality levels based on an increase in the temperature of the inverter 14, an increase in the temperature of the motor M, and an increase in the temperature of the DC/DC converter 71. That is to say, when the amount of power stored in the battery 4 is "small", the abnormality level is "3" and "level 3" is set as the current limitation level. When the amount of power stored in the battery 4 is "medium", the abnormality level is "2" and "level 2" is set as the current limitation level. When the amount of power stored in the battery 4 is "large", the abnormality level is "1" and "level 1" is set as the current limitation level. Also, when an increase in the temperature of the battery 4 is "large", the abnormality level is "3" and "level 3" is set as the current limitation level. When an increase in the temperature of the battery 4 is "medium", the abnormality level is "2" and "level 2" is set as the current limitation level. When an increase in the temperature of the battery 4 is "small", the abnormality level is "1" and "level 1" is set as the current limitation level.

It is also possible to monitor an output voltage of a low-voltage battery (not shown, e.g., output voltage of 12 V) other than the battery 4 and limit the current flowing through the coils of the motor M in accordance with the monitoring result (detection result) of the output voltage. For example, if the low-voltage battery is configured to be charged in accordance with output of the DC/DC converter 71, if an abnormality occurs in the DC/DC converter 71, the low-voltage battery is not charged, and its output voltage becomes lower than 12 V If the electric work vehicle is kept used in this state, the output voltage of the low-voltage battery further decreases, and a device driven by the output voltage of the low-voltage battery may stop or malfunction. Therefore, it is preferable to warn the operator to stop the electric work vehicle.

It is preferable that the controller 44 is configured to limit the current flowing through the motor M based on the current limitation levels described above. Note that the current limitation may be performed based on the highest current limitation level among the current limitation levels corresponding to the plurality of items at that point in time or an average of the current limitation levels corresponding to the plurality of items at that point in time. With this configuration, it is possible to sufficiently protect the inverter 14, the motor M, the DC/DC converter 71, or the battery 4, whose abnormality level is high, to suppress deterioration and avoid a situation in which the electric work vehicle cannot travel.

Referring back to FIG. 4, in this example, a coolant is circulated to cool the inverter 14, the motor M, and the DC/DC converter 71. Therefore, the tractor includes a cooling system 100. As shown in FIG. 4, in the cooling system 100 of this example, the coolant is caused to flow through the inverter 14, the motor M, the DC/DC converter 71, and the radiator 82 in this order by the pump 81. Specifically, a first flow path 91 through which the coolant flows from the radiator 82 toward the pump 81 is provided between a coolant outlet 82O of the radiator 82 and a coolant inlet 81I of the pump 81. A second flow path 92 through which the coolant flows from the pump 81 toward the inverter 14 is provided between a coolant outlet 81O of the pump 81 and a coolant inlet 14I of the inverter 14. A third flow path 93 through which the coolant flows from the inverter 14 toward the motor M is provided between a coolant outlet 14O of the inverter 14 and a coolant inlet MI of the motor M. A fourth flow path 94 through which the coolant flows from the motor M toward the DC/DC converter 71 is provided between a coolant outlet MO of the motor M and a coolant inlet 71I of the DC/DC converter 71. A fifth flow path 95 through which the coolant flows from the DC/DC converter 71 toward the radiator 82 is provided between a coolant outlet 71O of the DC/DC converter 71 and a coolant inlet 82I of the radiator 82.

The radiator 82 is provided with the fan 83 for cooling the radiator 82. When the temperature of the coolant is higher than a predetermined temperature, the fan 83 is driven by the fan controller 84. An output voltage of the DC/DC converter 71 is applied to the fan controller 84.

The coolant temperature information obtaining unit 76 obtains coolant temperature information indicative of the temperature of the coolant cooling the inverter 14, the motor M, and the DC/DC converter 71. In this example, the temperature of the coolant is measured in the fifth flow path 95 through which the coolant returns to the radiator 82 after passing through the inverter 14, the motor M, and the DC/DC converter 71. The temperature of the coolant obtained by the coolant temperature information obtaining unit 76 is transmitted as the coolant temperature information to the controller 44 and the fan controller 84. Therefore, the fan controller 84 is capable of driving the fan 83 in accordance with the temperature of the coolant.

When the temperature of the coolant is higher than a temperature set in advance, the controller 44 is configured to limit the current flowing through the motor M. As described above, the temperature of the coolant is transmitted as the coolant temperature information from the coolant temperature information obtaining unit 76. When the temperature of the coolant is high, the temperature of one of the inverter 14, the motor M, and the DC/DC converter 71 is high, and therefore, the controller 44 is configured to limit the current flowing through the motor M to suppress an increase in the temperature of the inverter 14, the motor M, or the DC/DC converter 71 having the high temperature.

FIG. 7 collectively shows factors based on which the current is limited in this example. In this example, the controller 44 is configured to limit the current based on "the temperature of the inverter", "the temperature of the motor", "the temperature of the DC/DC converter", "the amount of power stored in the battery", "the temperature of the battery", and "the temperature of the coolant", and the current limiter 73 is configured to control the current only based on "the temperature of the inverter". With this configuration, "the temperature of the inverter" is protected by both the controller 44 and the current limiter 73 in this example.

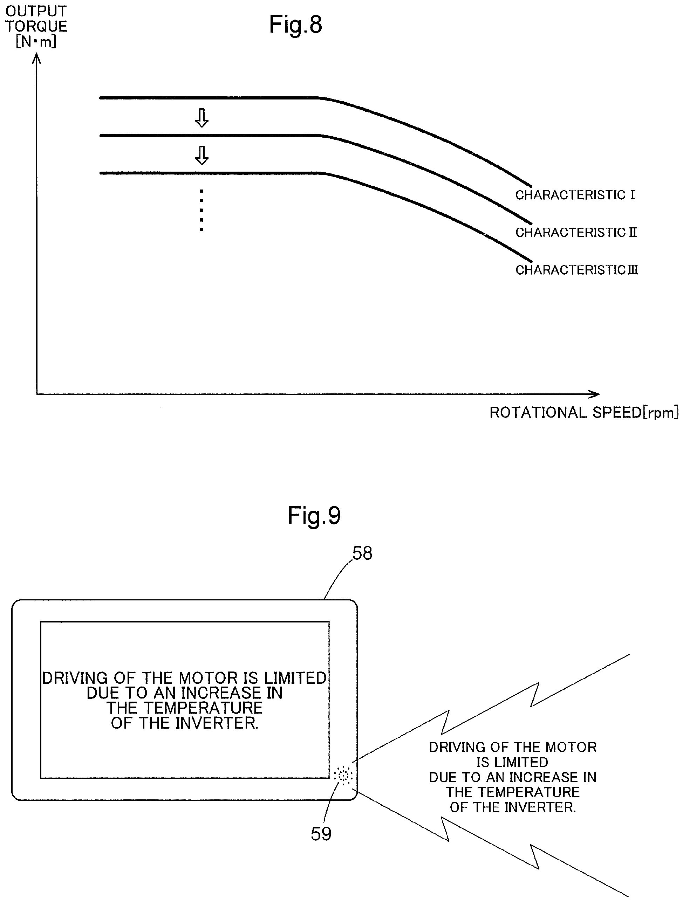

FIG. 8 shows torque curves defining a relationship between an output torque that can be output by the motor M and a rotational speed. The torque curves indicate an output torque that can be output when the motor M rotates at a predetermined rotational speed. When current limitation is not performed at all, the controller 44 is configured to control the motor M based on a characteristic I. When the current flowing through the motor M is limited, for example, an output torque that can be output at a predetermined rotational speed decreases, and therefore, the controller 44 is configured to control the motor M based on a characteristic II. When the current flowing through the motor M is further limited (e.g., when the "abnormality level" described above has increased), the controller 44 is configured to control the motor M based on a characteristic III. It is preferable that torque curves corresponding to limitations posed on the current flowing through the motor M are set (stored) in advance, and the controller 44 is configured to control the motor M based on the torque curves.

In this example, when the current flowing through the motor M is limited, the notification unit 57 outputs a notification indicating why the current flowing through the motor M is limited. The case where the current flowing through the motor M is limited is the case where the current flowing through the inverter 14 is limited by the above-described current limiter 73 or the controller 44. Accordingly, when the current flowing through the motor M is limited by the current limiter 73 or the controller 44, information indicating that the current is limited is transmitted to the notification unit 57.

For example, as shown in FIG. 9, when the current flowing through the motor M is limited based on the temperature of the inverter 14, it is preferable to display a message such as "Driving of the motor is limited due to an increase in the temperature of the inverter." on a display screen of a display device 58 provided in the driving section 3 of the tractor or output audio saying "Driving of the motor is limited due to an increase in the temperature of the inverter." from a speaker 59. This enables the operator to know why output of the motor M does not increase even though the operator operates the operation member 43. In cases where the current flowing through the motor M is limited due to an increase in the temperature of the motor M, an increase in the temperature of the DC/DC converter 71, a reduction in the amount of power stored in the battery 4, an increase in the temperature of the battery 4, or an increase in the temperature of the coolant, it is preferable to output a notification indicating why the current flowing through the motor M is limited, by displaying a message on the display screen of the display device 58 or outputting audio from the speaker 59, although such cases are not illustrated.

### Other Embodiments

The electric work vehicle is a tractor in the above-described embodiment, but the electric work vehicle may also be a work vehicle other than a tractor, such as a rice transplanter, a combine, a construction machine, or a lawn mower.

The motor M is a three-phase motor and the inverter 14 includes three arm portions A in the above-described embodiment, but the motor M does not necessarily need to be a three-phase motor, and the number of arm portions A of the inverter 14 can be set in accordance with the number of phases of the motor M.

In the above-described embodiment, the electric work vehicle includes the battery information obtaining unit 74 that obtains at least one of: power storage amount information indicative of the amount of power stored in the battery 4; and battery temperature information indicative of the temperature of the battery 4, and the controller 44 is configured to limit the current flowing through the motor M in at least one of: a case where the amount of power stored in the battery 4 is less than a power storage amount set in advance; and a case where the temperature of the battery is higher than a temperature set in advance, but a configuration is also possible in which the electric work vehicle does not include the battery information obtaining unit 74. In this case, the controller 44 does not necessarily need to limit the current flowing through the motor M based on the amount of power stored in the battery 4 or an increase in the temperature of the battery 4. Alternatively, the controller 44 may also be configured to limit the current flowing through the motor M if the amount of power stored in the battery 4 is less than the power storage amount set in advance and the temperature of the battery is higher than the temperature set in advance.

In the above-described embodiment, the electric work vehicle includes the abnormality level calculator 75 that calculates abnormality levels of the inverter 14, the motor M, the DC/DC converter 71, and the battery 4 based on the inverter temperature information, the motor temperature information, the converter temperature information, and the battery information, and the higher the abnormality levels are, the further the current flowing through the motor M is limited, but the abnormality level calculator 75 may also be configured to calculate the abnormality levels of the inverter 14, the motor M, and the DC/DC converter 71 based on the inverter temperature information, the motor temperature information, and the converter temperature information. Alternatively, a configuration is also possible in which the electric work vehicle does not include the abnormality level calculator 75. In this case, the controller 44 does not necessarily need to limit the current flowing through the motor M based on the abnormality levels.

In the above-described embodiment, the higher the abnormality levels transmitted from the abnormality level calculator 75 are, the further the controller 44 is configured to limit the current flowing through the motor M, and the abnormality levels are determined, as the basis for limiting the current, with respect to "an increase in the temperature of the inverter", "an increase in the temperature of the motor", "an increase in the temperature of the DC/DC converter", "the amount of power stored in the battery", and "an increase in the temperature of the battery" as shown in FIG. 6. It is also possible to determine abnormality levels with respect to "abnormality of a device" and "breakdown of a thermistor", for example. As for "abnormality of a device", when communication cannot be performed via a CAN (Controller Area Network), the current limitation level may be set to "level 2" to limit the current flowing through the motor M based on the "abnormality of a device" or "breakdown of a thermistor". As for "breakdown of a thermistor", when a thermistor has broken down, the current limitation level may be set to "level 0" to allow the electric work vehicle to travel without stopping. Of course, the current flowing through the motor M may be limited when the thermistor has broken down.

In the above-described embodiment, the electric work vehicle includes the coolant temperature information obtaining unit 76 that obtains coolant temperature information indicative of the temperature of the coolant cooling the inverter 14, the motor M, and the DC/DC converter 71, and the controller 44 is configured to limit the current flowing through the motor M when the temperature of the coolant is higher than a temperature set in advance, but a configuration is also possible in which the electric work vehicle does not include the coolant temperature information obtaining unit 76. In this case, the controller 44 does not necessarily need to limit the current flowing through the motor M based on the temperature of the coolant.

In the above-described embodiment, the electric work vehicle includes the notification unit 57 that outputs, when the current flowing through the motor M is limited, a notification indicating why the current flowing through the motor M is limited, but a configuration is also possible in which the electric work vehicle does not include the notification unit 57. Also, in the above-described embodiment, the notification unit 57 outputs the notification by displaying a message on the display screen of the display device 58 or outputting audio from the speaker 59, but it is also possible to provide a display lamp indicating why the current flowing through the motor M is limited at a position that is visible from the operator sitting in the driving section 3, for example. Alternatively, the notification unit 57 may also be configured to output the notification indicating why the current flowing through the motor M is limited, with use of a buzzer and a lamp provided on the body of the electric work vehicle. In this case, it is preferable to use the buzzer and the lamp to indicate different reasons why the current flowing through the motor M is limited.

### Industrial Applicability

The present invention is applicable to an electric work vehicle that travels using electric energy.

### Description of Reference Signs

4: Battery
14: Inverter
41: Rotational speed information obtaining unit
42: Travel device
43: Operation member
44: Controller
57: Notification unit
71: DC/DC converter
72: Temperature information obtaining unit
73: Current limiter
74: Battery information obtaining unit
75: Abnormality level calculator
76: Coolant temperature information obtaining unit
M: Motor

## Claims

1. An electric work vehicle comprising:
a battery installed in a machine body;
an inverter configured to convert DC power that is based on output from the battery to AC power;
a motor configured to be driven by the AC power converted by the inverter;
a rotational speed information obtaining unit configured to obtain rotational speed information indicative of a rotational speed of the motor;
a travel device configured to be driven by the motor;
an operation member configured to change a required rotational speed required for the motor;
a controller configured to control a current flowing through the motor by running the inverter in accordance with the rotational speed information and the required rotational speed;
a DC/DC converter configured to convert an output voltage of the battery to a voltage that is applicable to the controller as a power source;
a temperature information obtaining unit configured to obtain inverter temperature information indicative of a temperature of the inverter, motor temperature information indicative of a temperature of the motor, and converter temperature information indicative of a temperature of the DC/DC converter; and
a current limiter configured to limit the current flowing through the motor when the temperature of the inverter is higher than a temperature set in advance,
wherein the controller is configured to limit the current flowing through the motor when at least one of the temperature of the inverter, the temperature of the motor, and the temperature of the DC/DC converter is higher than a temperature set in advance.

2. The electric work vehicle according to claim 1, further comprising:
a battery information obtaining unit configured to obtain at least one of power storage amount information indicative of an amount of power stored in the battery; and battery temperature information indicative of a temperature of the battery,
wherein the controller is configured to limit the current flowing through the motor in at least one of: a case where the amount of power stored in the battery is less than a power storage amount set in advance; and a case where the temperature of the battery is higher than a temperature set in advance.

3. The electric work vehicle according to claim 1 or 2, further comprising:
an abnormality level calculator configured to calculate abnormality levels of the inverter, the motor, and the DC/DC converter based on the inverter temperature information, the motor temperature information, and the converter temperature information, respectively, and
the higher the abnormality levels are, the further the current flowing through the motor is limited.

4. The electric work vehicle according to any one of claims 1 to 3, further comprising:
a coolant temperature information obtaining unit configured to obtain coolant temperature information indicative of a temperature of coolant cooling the inverter, the motor, and the DC/DC converter,
wherein the controller is configured to limit the current flowing through the motor when the temperature of the coolant is higher than a temperature set in advance.

5. The electric work vehicle according to any one of claims 1 to 4, further comprising:
a notification unit configured to output, when the current flowing through the motor is limited, a notification indicating why the current flowing through the motor is limited.
